# EUROPEAN PATENT SPECIFICATION

(11) **EP 1 698 548 B1**
(45) Date of publication and mention of the grant of the patent: **27.06.2007**
(21) Application number: 06004246.2
(22) Date of filing: 02.03.2006
(51) Int. Cl.: B62K 11/06, B62K 19/12

(54) **Vehicle body frame for motorcycle**
Motorradrahmen
Cadre d'une motocyclette

(30) Priority: 02.03.2005 JP 2005056986; 28.07.2005 JP 2005218770
(43) Date of publication of application: 06.09.2006
(73) Proprietor: HONDA MOTOR CO., Ltd., Tokyo (JP)
(72) Inventor: Ishikawa, Yuzuru c/oHonda R&D Co., Ltd., Wako-shi Saitama, 351-0193 (JP); Taniguchi, Masayuki c/oHonda R&D Co., Ltd., Wako-shi Saitama, 351-0193 (JP); Hasega Wa, Kenji c/oHonda R&D Co., Ltd., Wako-shi Saitama, 351-0193 (JP); Nakajima, Shunichi c/oHonda R&D Co., Ltd., Wako-shi Saitama, 351-0193 (JP); Shimoka Wa, Koji c/oHonda R&D Co., Ltd., Wako-shi Saitama, 351-0193 (JP); Hoshi, Norio c/oHonda R&D Co., Ltd., Wako-shi Saitama, 351-0193 (JP)
(74) Representative: Rupp, Christian

(56) References cited:
- DE-C- 438 408
- DE-C- 815 908
- US-A- 4 696 363
- US-A- 5 022 456
- US-A- 5 375 677
- PATENT ABSTRACTS OF JAPAN vol. 015, no. 441 (M-1177), 11 November 1991 (1991-11-11) & JP 03 186490 A (SUZUKI MOTOR CORP), 14 August 1991 (1991-08-14)

## Description

The present invention relates to an improvement in a vehicle body frame for a motorcycle.

As a conventional vehicle body frame for a motorcycle such as in closest prior art document US 5022456 which discloses all the features of the preamble of independent claims 1 and 3, there has been known a vehicle body frame which is cast from an aluminum alloy and in which a main frame portion extending rearwards from a head pipe is single (see, for example, Patent Document 1).

### [Patent Document 1]

Japanese Utility Model Laid-open No. Hei 1-68293 (JP 10682934)

As shown in Figs. 1 and 3 of Patent Document 1, a frame 10 is a member cast from an aluminum alloy, which is composed of a member 20 and a member 40 split to the left and the right, wherein respective front half portions 23 and 43 (for symbol 43, see Fig. 4) extending from the side of a head tube 21 are rectilinear, respective rear half portions 24 and 44 are dividedly extended to the outer sides and to the skewly rearwardly downward side from the rear ends of the front half portions 23 and 43, and the left and right front half portions 23 and 43 constitute a single main frame.

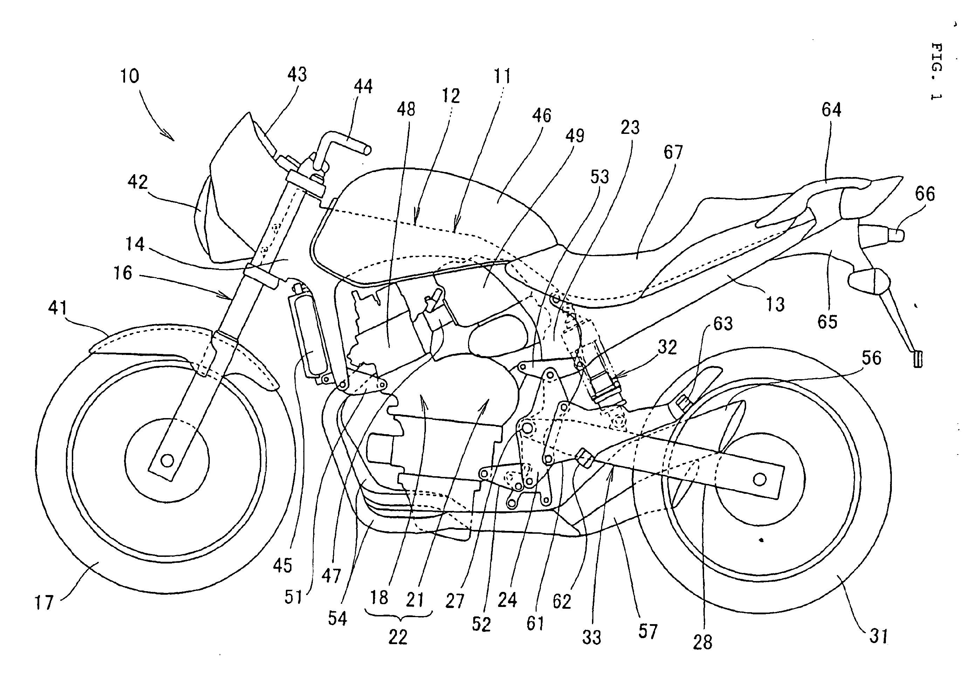

While the frame 10 is composed of the left and right two component parts, the structure split to the left and the right has the problem that a left-right assembly error or errors are liable to be generated between the member 20 and the member 40. For example, it is difficult to accurately match the positions in the front-rear direction of left and right pivot portions 28 and 48 for supporting a rear swing arm 6 (see Fig. 1), or to accurately arrange the rear half portion 24 and the rear half portion 44 in left-right symmetry with respect to the center line extending in the front-rear direction of the frame 10.
In addition, since the frame 10 is long in the front-rear direction, the length of welding of the member 20 and the member 40 to each other is large, and the welding operation needs a long time, so that productivity is lowered.

It is an object of the present invention to improve a vehicle body frame for a motorcycle, thereby to form the vehicle body frame more accurately, and to enhance the productivity of the vehicle body frame.

### [Means for Solving the Problems]

The invention as set forth in first independent claim 1 resides in a vehicle body frame for a motorcycle including a head pipe for supporting a front wheel suspension at the front end thereof, a single main frame extended rearwards from the head pipe, and a rear frame for supporting a rear wheel suspension, the rear frame extended substantially downwards from a rear portion of the main frame. The vehicle body frame is comprised of front and rear two component parts cast from an aluminum alloy; and the main frame is provided with a portion being the smallest in sectional area at substantially the center in the longitudinal direction thereof, and the front and rear two component parts are coupled on the rear side relative to the smallest sectional area portion.

When the front and rear two component parts of the vehicle body frame are dividedly distributed so that the front component part is located on the main frame side and the rear component part is located on the rear frame side, it is possible to form the front component part as a component part including the head pipe and the main frame integrated with each other, to form the rear component part as a component part for supporting the rear wheel suspension, and to reduce an error or errors in the left-right assembly accuracy of these component parts.
In addition, it is possible to reduce the sectional area of the coupling portion between the front and rear two component parts, and, in the case of coupling the front and rear two component parts by welding, to reduce the length of welding.

Further, while bending stress is enlarged at the smallest sectional area portion located at substantially the center in the longitudinal direction of the main frame, the arrangement of the coupling portion between the front and rear two component parts of the vehicle body frame on the rear side of the smallest sectional area portion ensures that stress is not concentrated on the coupling portion and that an excessively high stress is not generated.

According to the invention as set forth in claim 2, a front frame constituting a front portion of the main frame is formed to be hollow by placing a core at the time of casting, and a rear frame constituting a rear portion of the main frame is cast by use of a left-right split die so that recessed portions opened in the leftward and rightward directions and pivot support portions projecting in the leftward and rightward directions are integrally formed.

With the front frame formed to be hollow, a reduction in weight is contrived. With the rear frame provided integrally with the recessed portions opened in the leftward and rightward directions and the pivot support portions, the rear wheel suspension is formed in such a shape as to be supported easily, while contriving a reduction in weight.

The invention as set forth in second independent claim 3 resides in a vehicle body frame for a motorcycle including a head pipe for supporting a front wheel suspension at the front end thereof, a single main frame extended rearwards from the head pipe, and arear frame for supporting a rear wheel suspension, the rear frame extending substantially downwards from a rear portion of the main frame. The vehicle body frame is cast from an aluminum alloy and is comprised of three component parts arranged in the front-rear direction; and the main frame is provided with a portion being the smallest in sectional area at substantially the center in the longitudinal direction thereof, and the rear-side two component parts of the three component parts are coupled on the rear side relative to the smallest sectional area portion.

When the front-rear three component parts of the vehicle body frame are dividedly distributed so that the front-side two component parts are located on the main frame side whereas the rear-side one component part is located on the rear frame side, it is possible to form the front-side two component parts as component parts including the head pipe and the rear frame, to form the rear-side one component part as a component part for supporting the rear wheel suspension, and to reduce an error or errors in the left-right assembly accuracy of these component parts.
In addition, it is possible to reduce the sectional areas of the coupling portions among the front-rear three component portions, and, in the case of connecting the front-rear three component portions by welding, to reduce the lengths of welding.

Further, while bending stress is enlarged at the smallest sectional area portion located at substantially the center in the longitudinal direction of the main frame, the arrangement of the coupling portion between the rear-side two component parts of the three component parts of the vehicle body frame on the rear side of the smallest sectional area ensures that stress is not concentrated on the coupling portion and that an excessively high stress is not generated.

According to the invention as set forth in claim 4, the single main frame is bisected in the front-rear direction of the vehicle body.
It is possible to reduce an error or errors in the left-right assembly accuracy of the main frame bisected in the front-rear direction. In addition, the respective members of the bisected main frame are easier to produce.

According to the invention as set forth in claim 5, split and welded portions of the vehicle body frame are provided respectively at a portion on the front side and at a portion on the rear side, relative to the position where the sectional area of the main frame is the smallest.

The split and welded portions of the vehicle body frame are provided respectively at a portion on the front side and at a portion on the rear side, while avoiding the position where the sectional area of the main frame is the smallest, whereby rigidity is prevented from being lowered at the split and welded portions of the vehicle body frame. Besides, since a large-type hollow casting can be obviated, it is easy to cast the main frame in a hollow form.

According to the invention as set forth in claim 6, an engine hanger portion provided in the vehicle body frame for supporting an engine is structurally separate member from the main frame.
In the case of gravity casting of the vehicle body frame, a better running of the molten metal is achieved in the engine hanger portion.

The invention as set forth in claim 7 is characterized in that the single main frame is comprised of a hollow member varied in sectional shape from portion to portion.
The rigidity of the main frame is varied from portion to portion, and a reduction in weight of the main frame is contrived.

In the invention as set forth in claim 1, the vehicle body frame is composed of the front and rear two component parts cast from an aluminum alloy. Therefore, when for example the front and rear two component parts of the vehicle body frame are dividedly distributed so that the front-side component part is located on the main frame side and the rear-side component part is located on the rear frame side, it is possible to form the front-side component part and the rear-side component part in structures suitable for the respective portions, to reduce an error or errors in the left-right assembly accuracy, and to form the vehicle body frame with high accuracy.

In addition, in the case of coupling the front and rear two component parts by welding, it is possible to reduce the length of welding, to perform welding in a short time, to enhance productivity, and to achieve a reduction in cost.
Furthermore, since the front and rear two component parts are coupled on the rear side relative to the portion where the sectional area of the main frame is the smallest, stress concentration on the coupling portion between the front and rear two component parts is not liable to occur.

The invention as set forth in claim 2, the front frame is formed to be hollow, whereby a reduction in weight can be contrived. In addition, since the rear frame is integrally formed with the recessed portions opened in the leftward and rightward directions and the pivot support portions, it is possible to form the rear wheel suspension in such a shape as to be easy to support, while contriving a reduction in weight.

In the invention as set forth in claim 3, the vehicle body frame is cast from an aluminum alloy and is composed of three component parts arranged in the front-rear direction, so that when the front-rear three component parts of the vehicle body frame are dividedly distributed so that the front-side two component parts are located on the main frame side whereas the rear-side one component part is located on the rear frame side, the front-side two component parts and the rear-side one component part can be formed in structures suitable for the respective portions, the left-right assembly errors can be reduced, and the vehicle body frame can be formed with high accuracy.
In addition, in the case of connecting the front-rear three component parts by welding, it is possible to reduce the lengths of welding, to achieve the welding in a short time, and to enhance productivity.

Further, since the rear-side two component parts of the three component parts of the vehicle body frame are coupled on the rear side relative to the portion where the sectional area of the main frame is the smallest, it is possible to ensure that stress concentration is not liable to occur on the coupling portion between the rear-side two component parts, to further reduce the sectional area of the coupling portion, and to contrive a reduction in weight of the vehicle body frame.

In the invention as set forth in claim 4, the single main frame is bisected in the front-rear direction of the vehicle body, so that it is possible to reduce the left-right assembly errors of the main frame, and to form the main frame with high accuracy. In addition, the respective members of the split main frame are easier to produce, and productivity is enhanced.

In the invention as set forth in claim 5, the split and welded portions of the vehicle body frame are provided respectively at a portion on the front side and at a portion on the rear side relative to the position where the sectional area of the main frame is the smallest, so that the split and welded portions are located while avoiding the position where the sectional area of the main frame is the smallest, i.e., while avoiding the portion where the frame rigidity is the lowest, whereby generation of an excessively high stress is obviated. Besides, since large-type hollow casting can be obviated, it is easy to achieve the hollow casting of the main frame.

In the invention as set forth in claim 6, the engine hanger portion is structurally separate member from the main body, so that in the case of gravity casting of the engine hanger portion, the running of the molten metal in the engine hanger portion can be enhanced, and casting quality can be enhanced.

In the invention as set forth in claim 7, the single main frame is composed of a hollow member varied in sectional shape from portion to portion, so that the rigidity of the main frame can be varied from portion to portion, and the main frame can be reduced in weight.

Fig. 1 is a side view of a motorcycle adopting a vehicle body frame according to the present invention (first embodiment).

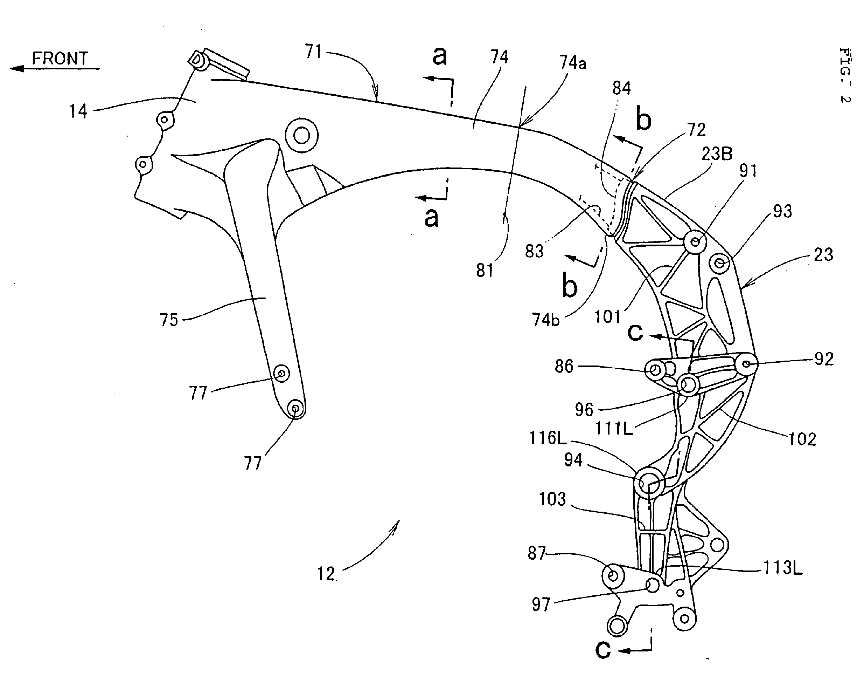

Fig. 2 is a side view of a main frame according to the present invention.

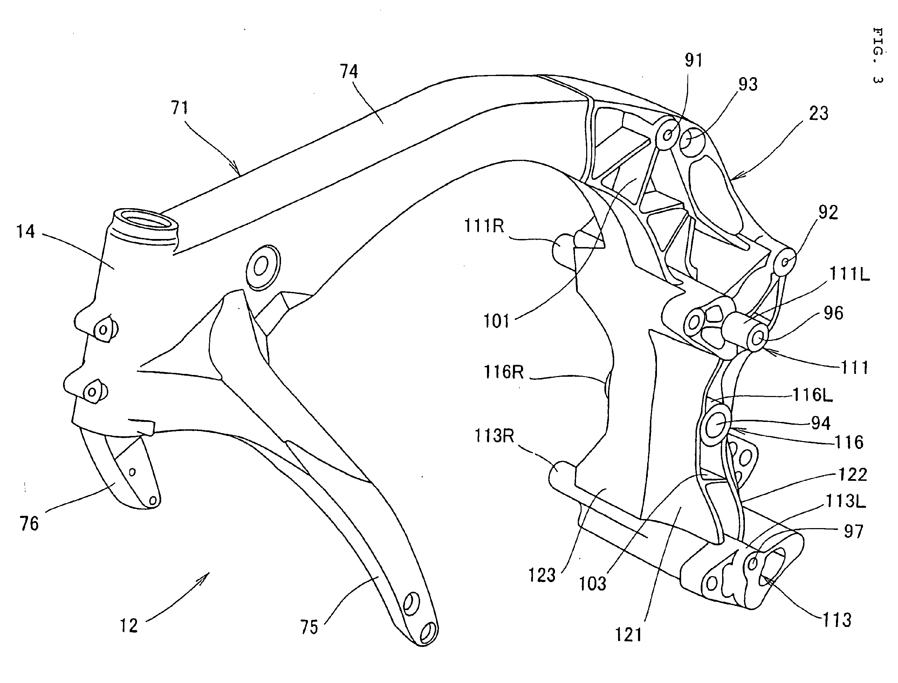

Fig. 3 is a perspective view of the main frame according to the present invention.

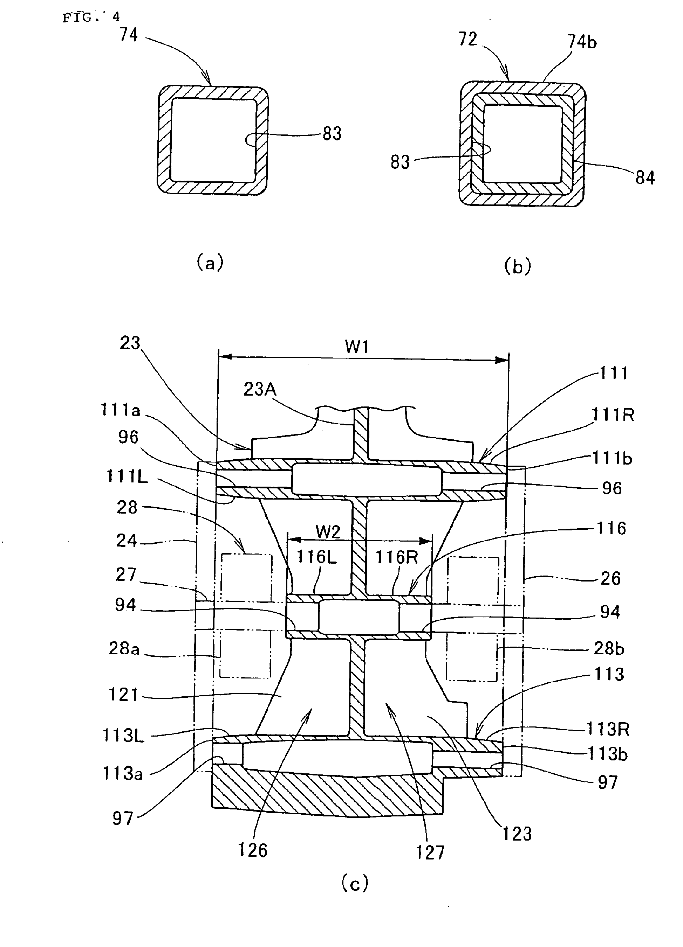

Fig. 4 is a sectional view of the main frame according to the present invention.

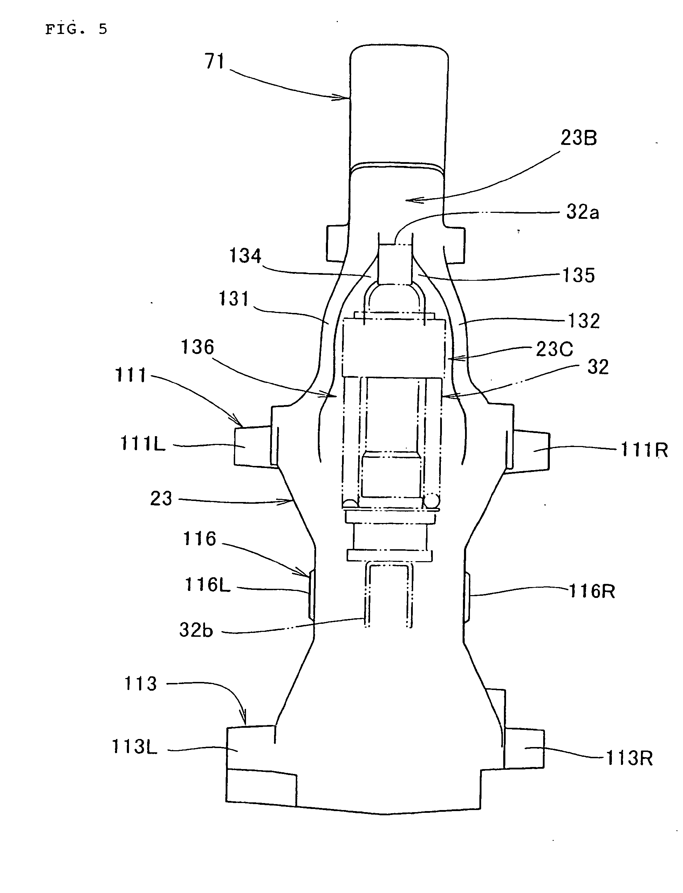

Fig. 5 is a back elevation of the main frame according to the present invention.

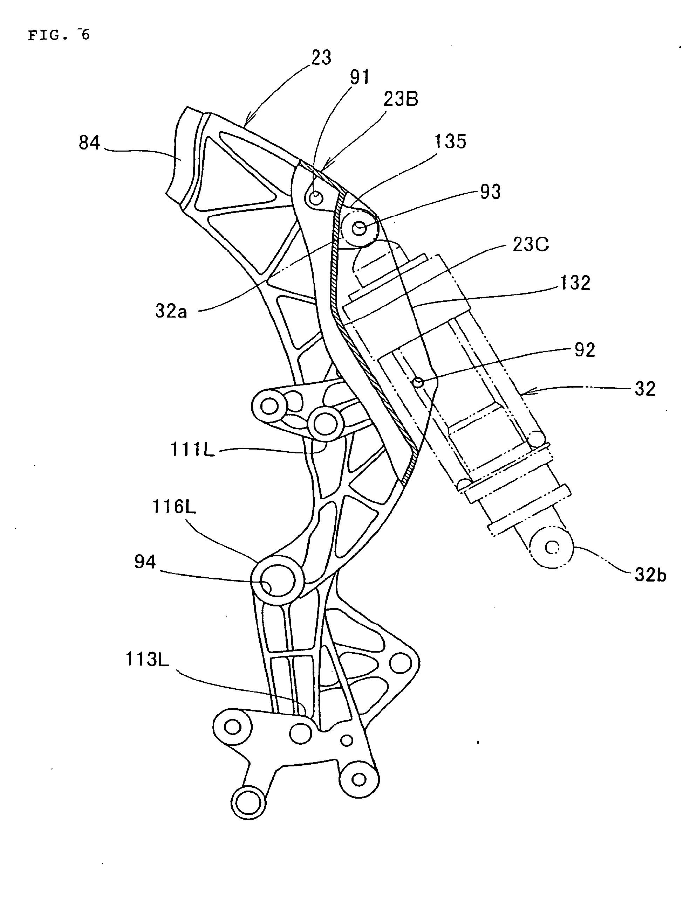

Fig. 6 is a sectional view (partly side view) showing the condition where a rear cushion unit is mounted to a rear frame according to the present invention.

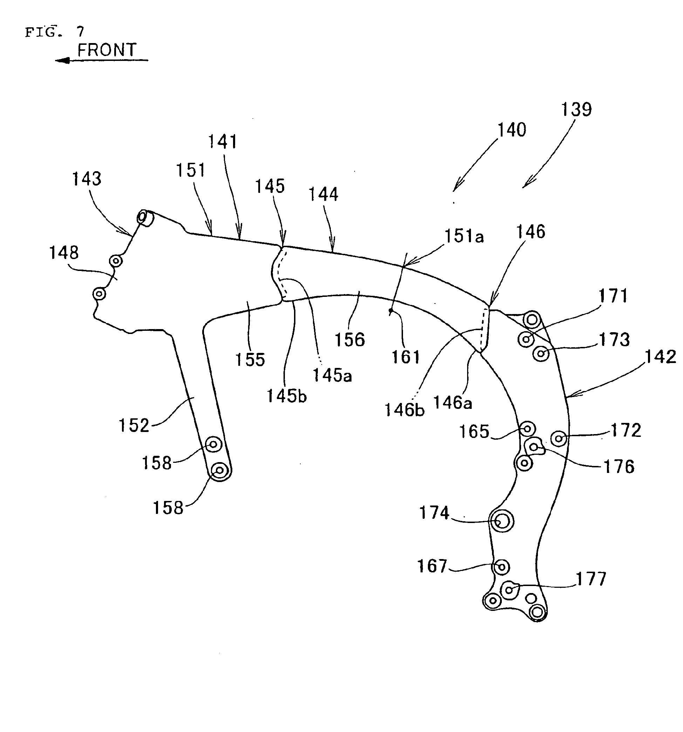

Fig. 7 is a side view of a main frame according to the present invention (second embodiment).

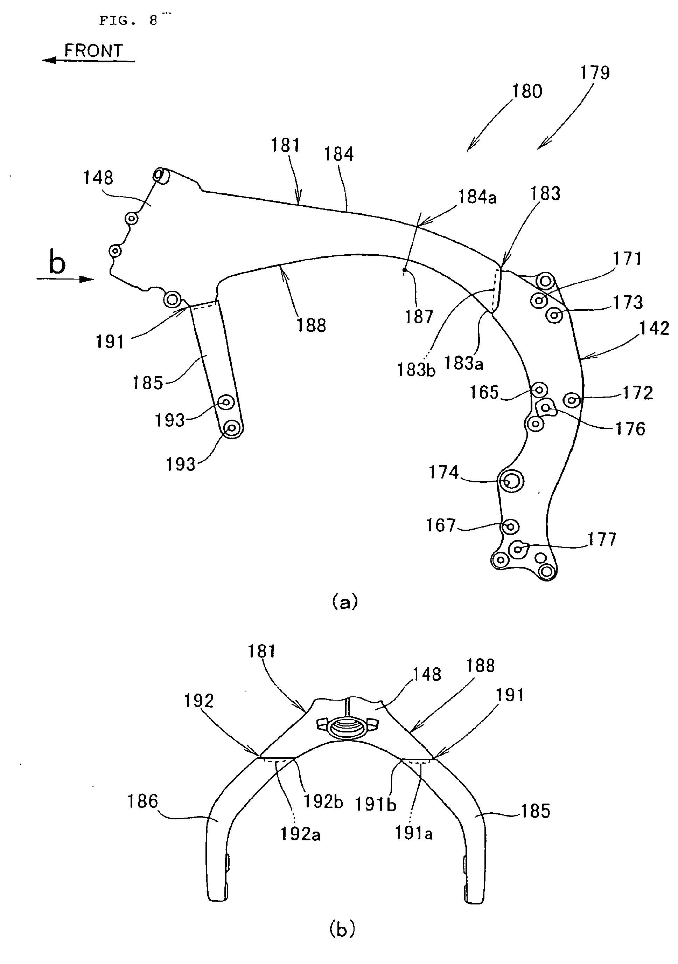

Fig. 8 is a side view of a main frame according to the present invention (third embodiment).

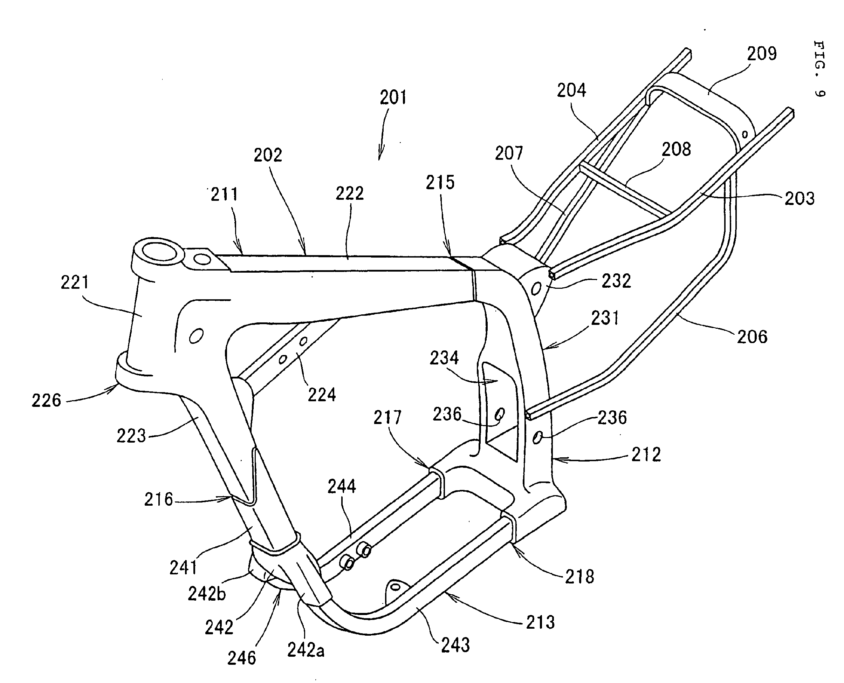

Fig. 9 is a perspective view of a vehicle body frame according to the present invention (fourth embodiment).

A best mode for carrying out the present invention will be described below, based on the accompanying drawings. Incidentally, the drawings are to be looked at according to the posture of symbols.
Fig. 1 is a side view (first embodiment) of a motorcycle adopting a vehicle body frame according to the present invention. The motorcycle 10 has a structure in which the vehicle body frame 11 is composed of a main frame 12 on the front side, and a left-right pair of seat rails 13, 13 (only symbol 13 on the viewer's side is shown) extended skewly rearwardly upwards from a rear upper portion of the main frame 12, a front fork 16 is steerably mounted to a head pipe 14 provided at a front end portion of the main frame 12, a front wheel 17 mounted to the lower ends of the front fork 16, a power unit 22 composed of an engine 18 and a transmission 21 is supported by a front lower portion and a rear lower portion of the main frame 12, a pivot shaft 27 is mounted to a rear frame 23 provided at a rear portion of the main frame 12 and a left-right pair of brackets 24, 26 (only symbol 24 on the viewer's side is shown) mounted to both lateral sides of the rear frame 23, a swing arm 28 vertically swingably mounted to the pivot shaft 27, a rear wheel 31 mounted to a rear end portion of the swing arm 28, and a rear cushion unit 32 bridgingly provided between an upper portion of the swing arm 28 and a rear upper portion of the main frame 12.
The swing arm 28 and the rear cushion unit 32 constitute a rear wheel suspension 33 for suspending the rear wheel 31.

Here, symbol 41 denotes a front fender covering the upper side of the front wheel 17, 42 denotes a head lamp, 43 denotes a meter, 44 denotes a steering handle, 45 denotes a radiator, 46 denotes a fuel tank mounted to an upper portion of the main frame 12, 47 denotes a throttle body mounted to a rear portion of a cylinder head 48 of the engine 18, 49 denotes an air cleaner connected to the throttle body 47, symbols 51 and 52 denote support brackets supporting the power unit 22, 53 denotes a rear support portion provided in the rear frame 23 for supporting the power unit 22, 54 is an exhaust pipe extended rearwards from a front portion of the cylinder head 48 so as to pass on the lower side of the engine 18, and symbols 56 and 57 denote a first muffler and a second muffler connected to the plurality of exhaust pipes 54 via a manifold.

In addition, symbols 61, 61 (only symbol 61 on the viewer's side is shown) denote a left-right pair of step support stays mounted respectively to the brackets 24 and 26, symbols 62, 62 (only symbol 62 on the viewer's side is shown) denote a left-right pair of driver's steps mounted respectively to the step support stays 61, 61, symbols 63, 63 (only symbol 63 on the viewer's side is shown) denote a left-right pair of passenger's steps mounted respectively to the step support stays 61, 61, symbol 64 denotes a grab rail, 65 denotes a rear fender covering the upper side of the rear wheel 31, 66 denotes a tail lamp, and 67 denotes a seat mounted to the seat rails 13, 13.

Fig. 2 is a side view (arrow (FRONT) in the figure indicates the front side of the vehicle) of a main frame according to the present invention. The main frame 12 is a member cast from an aluminum alloy and composed of front and rear two component parts, namely, a front frame 71 on the front side, and the rear frame 23 connected to the rear end of the front frame 71 by welding. Incidentally, symbol 72 denotes a welded coupling portion between the front frame 71 and the rear frame 23.

The front frame 71 is a member formed to be hollow by placing a core at the time of casting, in which the head pipe 14, a single main frame 74 extended rearwards from the head pipe 14, and a left-right pair of front support portions 75 and 76 (only symbol 75 on the viewer's side is shown) extended skewly downwardly sideways and skewly downwardly rearwards from a front lower portion of a main frame portion 74 so as to support a front portion of the engine 18 (see Fig. 1) are integrally formed. Incidentally, symbols 77, 77 denote engine support holes provided respectively in tip end portions of the front support portions 75 and 76 so as to support a front portion of the engine 18 (see Fig. 1).

The main frame portion 74 is a member in which a small section portion 74a (a straight line passing through the small section portion 74a is denoted by 81) being the smallest in sectional area is provided at a rear portion, and the sectional area of a front-side coupling portion 74b provided at a rear portion (i.e., the sectional area of the coupling portion 72) is set to be greater than the sectional area of the small section portion 74a.

During running of the vehicle, a force tending to deform the main frame 12 mounted in the vehicle is exerted on the main frame 12 from the head pipe 14 through the front wheel and the front fork or from the rear frame 23 through the rear wheel, the swing arm and the pivot shaft.

For example, at the time of braking, a rearward force acts on the head pipe 14 from the front wheel side, whereby the main frame 12 as a whole is deformed so as to shorten the distance between a front wheel axle and a rear wheel axle, namely, the wheel base.
In addition, at the time of accelerating by opening the throttle, a forward force is exerted on the rear frame 23 due to the drive force of the rear wheel, whereby the main frame 12 as a whole is deformed so as to shorten the wheel base.

In the above cases, a large stress is generated in the small section portion 74a. However, since the coupling portion 72 is larger than the small section portion 74a in sectional area, the stress generated in the coupling portion 72 is smaller than that in the small section portion 74a.

The coupling portion 72 is provided on the vehicle rear side relative to the small section portion 74a. The reason is as follows. The maximum input from the head pipe 14 side (for example, an input at the time of full braking) is greater than the maximum input from the rear frame 23 side, so that an excessively high stress would be generated in the coupling portion 72 if the coupling portion 72 is provided on the vehicle front side relative to the small section portion 74a.
In addition, this is because the coupling portion 72 is located at a position where splitting into the main frame body 74 and the rear frame body 23 supporting the portions of the vehicle body can be easily achieved.

The rear frame 23 is a member including a rear-side coupling portion 84 projected so as to be fitted in a hollow portion 83 of a front-side coupling portion 74b of the front frame 71, a left-right pair of power unit mount holes 86, 86 (only symbol 86 on the viewer's side is shown) and a left-right pair of power unit mount holes 87, 87 (only symbol 87 on the viewer's side is shown) for mounting a rear portion of the power unit 22 (see Fig. 1), seat rail mount holes 91, 91 (only symbol 91 on the viewer's side is shown) and seat rail mount holes 92, 92 (only symbol 92 on the viewer's side is shown) for mounting the seat rains 13, 13 (see Fig. 1), a left-right pair of cushion upper portion mount holes 93, 93 (only symbol 93 on the viewer's side is shown) for mounting one end of the rear cushion unit 32 (see Fig. 1), a pivot insertion hole 94 in which to insert the pivot shaft 27 (see Fig. 1), and left-right pairs of bracket mount holes 96, 96 (only symbol 96 on the viewer's side is shown) and bracket mount holes 97, 97 (only symbol 97 on the viewer's side is shown) for mounting the brackets 24 and 26 (see Fig. 1), wherein a plurality of ribs, for example, left-right pairs of ribs 101 to 103 (only symbols 101 to 103 on the viewer's side are shown) are provided on side surfaces.

Fig. 3 is a perspective view of the main frame according to the present invention, showing the main frame 12 in which the rear frame 23 integrally formed by casting is coupled to the main frame portion 74 of the front frame 71 integrally formed by casting.

The single main frame portion 74 extends substantially rectilinearly toward the rear side, and the front support portions 75 and 76 for constituting the engine hanger extend substantially downwards toward the left and right sides from the main frame portion 74. The main frame portion 74 and the front support portions 75 and 76 are hollow members.
Of the rear frame 23, an upper bracket mount portion 111 (composed of a left-right pair of a left upper mount portion 111L and a right upper mount portion 111R) provided with a bracket mount hole 96 and a lower bracket mount portion 113 (composed of a left-right pair of a left lower mount portion 113L and a right lower mount portion 113R) provided with a bracket mount hole 97 are members projected sideways relative to a pivot support portion 116 (composed of a left-right pair of a left pivot support portion 116L and a right pivot support portion 116R) provided with a pivot insertion hole 94.

Here, symbols 121 and 122 denote left reinforcing walls for connecting the left upper mount portion 111L, the left pivot support portion 116L and the left lower mount portion 113L. Symbols 123 and 124 (only symbol 123 is shown) denote right reinforcing walls for connecting the right upper mount portion 111R, the right pivot support portion 116R and the right lower mount portion 113R.

Figs. 4(a) to 4(c) are sectional views of the main frame according to the present invention.
Fig. 4(a) is a sectional view along line a-a of Fig. 2, and shows that the main frame portion 74 is formed to be angular pipe-like in section.
Fig. 4(b) is a sectional view along line b-b of Fig. 2, in which the coupling portion 72 between the front frame and the rear frame is a member including the angular pipe-like rear-side coupling portion 84 fitted in the inside of the angular pipe-like front-side coupling portion 74b.

Fig. 4(c) is a sectional view along line c-c of Fig. 2, and shows that the rear frame 23 is provided with a vertical wall 23A extending vertically over substantially the whole range of a central portion thereof; the left upper mount portion 111L, the right upper mount portion 111R, the left pivot support portion 116L, the right pivot support portion 116R, the left lower mount portion 113L, and the right lower mount portion 113R are extended respectively leftward or rightward from the vertical wall 23A; the width W1 of the upper bracket mount portion 111 and the lower bracket mount portion 113 is set to be greater than the width W2 of the pivot support portion 116; the left arm 28a and the right arm 28b of the swing arm 28 are disposed between the brackets 24, 26 mounted to end faces (an upper-side left end face 111a, an upper-side right end face 111b, a lower-side left end face 113a, and a lower-side right end face 113b) of the upper bracket mount portion 111 and the lower bracket mount portion 113 and the pivot support portion 116; and the pivot shaft 27 is passed through the bracket 24, the left arm 28a, the pivot support portion 116, the right arm 28b, and the bracket 26, whereby the swing arm 28 is swingably supported by the pivot support portion 116 and the brackets 24, 26 through the pivot shaft 27.

In addition, it is shown that the left reinforcing walls 121, 122 (only the left reinforcing wall 121 is shown) and the right reinforcing walls 123, 124 (only the right reinforcing wall 123 is shown) are gradually enlarged in width from the pivot support portion 116 side toward the upper bracket mount portion 111 side, and are gradually enlarged in width from the pivot support portion 116 side toward the lower bracket mount portion 113 side, whereby the upper bracket mount portion 111 and the lower bracket mount portion 113 are reinforced. Incidentally, symbols 126 and 127 denote recessed portions formed on the vehicle lateral sides relative to the vertical wall 23A and between the upper bracket mount portion 111 and the lower bracket mount portion 113.

Thus, the rear frame 23 includes the recessed portions 126 and 127 opened in the leftward and rightward directions and the pivot support portions 116 projecting in the leftward and rightward directions, which are integrally formed.

Fig. 5 is a back elevation of the main frame according to the present invention. The rear frame 23 has a rear wall 23B provided with rising walls 131 and 132 integrally projected rearwards respectively from left and right edge portions thereof for covering the left and right portions of the rear cushion unit 32. Incidentally, symbols 134 and 135 denote cushion upper portion mount portions (see Fig. 2) provided respectively with cushion upper portion mount holes 93 (see Fig. 2) for mounting an upper end portion 32a of the rear cushion unit 32, symbol 136 denotes a space for containing a part of the rear cushion unit 32 between the left and right rising walls 131 and 132, and symbol 32b is a lower end portion for mounting the rear cushion unit 32 to the swing arm 28 (see Fig. 1) .

Fig. 6 is a sectional view (partly side view) showing the condition where a rear cushion unit is mounted to the rear frame according to the present invention. A rear bottom wall 23C located between the rising walls 131 and 132 (only the rising wall 132 on the depth side is shown) and constituting a part of the rear wall 23B is a portion provided substantially along the rear cushion unit 32, and the cushion upper portion mount portions 134 and 135 (only the cushion upper portion mount portion 135 is shown) are portions projected from the rear bottom wall 23C and the rising walls 131 and 132.

The rising walls 131 and 132 can be easily formed by casting, whereby they can be easily formed and it is possible to reduce cost and enhance productivity, as compared with the case where the rising walls as separate members are mounted by welding. In addition, the rising walls 131 and 132 function also as reinforcing ribs, so that the strength and rigidity of the rear frame 23 can be easily enhanced, as compared with the case where reinforcing members as separate members are mounted.

As shown in Figs. 1 and 2 above, the present invention is firstly characterized in that, in the vehicle body frame 11 for the motorcycle 10 including the head pipe 14 for supporting the front fork 16 as a front wheel suspension at the front end thereof, the main frame portion 74 as a single main frame extended rearwards from the head pipe 14, and the rear frame 23 as a pivot frame for supporting the rear wheel suspension 33, the rear frame 23 extending substantially downwards from a rear portion of the main frame portion 74, the main frame 12 constituting the vehicle body frame 11 is composed of the front and rear two component parts, i.e., the front frame 71 on the front side and the rear frame 23 on the rear side which are cast from an aluminum alloy, the main frame portion 74 is provided with the small section portion 74a as the portion being the smallest in sectional area at substantially the center in the longitudinal direction thereof, and the front and rear two component parts are coupled on the rear side relative to the small section portion 74a.

The main frame 12 is cast from an aluminum alloy, and is composed of the front frame 71 and the rear frame 23. Therefore, when the front-side component part of the front and rear two component parts of the main frame 12 is distributed on the front frame 71 side and the rear-side component part is distributed on the rear frame 23 side, the front frame 71 and the rear frame 23 can be formed in such structures as to be suitable for the respective positions, an error or errors in assembly on the left and right sides can be reduced, and the main frame 12 can be formed with good accuracy.

In addition, where the front frame 71 and the rear frame 23 are coupled by welding, the length of welding can be reduced, the welding can be carried out in a short time, and productivity can be enhanced.

Further, since the front frame 71 and the rear frame 23 are coupled on the rear side relative to the small section area 74a of the main frame portion 74, it is possible to ensure that stress is not liable to be concentrated on the coupling portion 72 between the front frame 71 and the rear frame 23, the sectional area of the coupling portion 72 can be further reduced, and it is possible to contrive a reduction in the weight of the main frame 12 and, hence, of the vehicle body frame 11.

The present invention is secondly characterized in that, as shown in Fig. 2 and Figs. 4(a) to 4(c), the front frame 71 constituting a front portion of the main frame portion 74 is formed to be hollow by placing a core at the time of casting, and the rear frame 23 constituting a rear portion of the main frame portion 74 is cast by use of a left-right split die, whereby the recessed portions 126 and 127 opened in the leftward and rightward directions and the pivot support portions 116 projecting in the leftward and rightward directions are integrally formed in the rear frame 23.

With the front frame 71 formed to be hollow, a reduction in weight can be contrived. In addition, since the rear frame 23 is integrally formed with the recessed portions 126 and 127 opened in the leftward and rightward directions and the pivot support portions 116, the rear wheel suspension 33 (see Fig. 1) can be easily supported by the pivot support portions 116 while contriving a reduction in weight.

Fig. 7 is a side view of a main frame (second embodiment) according to the present invention. A main frame 140 of a vehicle body frame 139 is a member cast from an aluminum alloy and composed of a front frame 141 on the front side and a rear frame 142 welded to the rear end of the front frame 141.

The from frame 141 is a member formed to be hollow by placing a core at the time of casting, and is composed of two component parts, i.e., a front half 143 and a rear half 144 welded to the rear end of the front half 143. Incidentally, symbol 145 denotes a first coupling portion between the front half 143 and the rear half 144, and symbol 146 denotes a second coupling portion between the rear half 144 and the rear frame 142.
Thus, the main frame 140 is a member trisected in the front-rear direction.

In addition, the front frame 141 is composed of a head pipe 148, a single main frame portion 151 extended substantially rectilinearly rearwards from the head pipe 148, and a left-right pair of front support portions 152 and 153 (only symbol 152 on the viewer's side is shown) extended skewly downwardly sideways and skewly downwardly rearwards from a front lower portion of the main frame portion 151 for supporting a front portion of an engine 18 (see Fig. 1).

The main frame portion 151 is composed of a front frame portion 155, and a rear frame portion 156 welded to the rear end of the front frame 155. Namely, the main frame portion 151 is a portion bisected in the front-rear direction. Both the front frame portion 155 and the rear frame portion 156 are members angular pipe-like in section. Incidentally, symbols 158, 158 denote engine support holes provided respectively in tip end portions of the front support portions 152 and 153 for supporting a front portion of the engine 18 (see Fig. 1).

Thus, the main frame portion 151 is split into the front frame portion 155 and the rear frame portion 156, whereby the front frame portion 155 and the rear frame portion 156 can be formed in small shapes, they can be cast easily, running of molten metal at the time of casting can be made favorable, and casting quality can be enhanced.

The main frame portion 151 is a portion in which a small section portion 151a (a straight line passing through the small section portion 151a is denoted by 161) being the smallest in sectional area at substantially the center of the rear frame portion 156, the sectional areas of the first coupling portion 145 and the second coupling portion 146 are set greater than the sectional area of the small section portion 151a, and the sectional area of the first coupling portion 145 is set greater than the sectional area of the second coupling portion 146.

The first coupling portion 145 is composed of a first front-side coupling portion 145a (projected portion) provided at the rear end of the front frame portion 155, and a first rear-side coupling portion 145b (recessed portion) provided at the front end of the rear frame portion 156.

The second coupling portion 146 is composed of a second front-side coupling portion 146a (recessed portion) provided at the rear end of the rear frame portion 156, and a second rear-side coupling portion 146b (projected portion) provided at the front end of the rear frame 142.

The second coupling portion 146 is provided on the rear side relative to the small section portion 151a because the maximum input from the rear frame 142 side is smaller than the maximum input from the head pipe 148 side. The first coupling portion 145 is provided on the front side relative to the small section portion 151a because, even when a greater input is exerted on the first coupling portion 145 than on the second coupling portion 146, the structure in which the sectional area of the first coupling portion 145 is greater than the sectional area of the second coupling portion 146 ensures that the bending stress at the first coupling portion 145 can be reduced to be comparable to that at the second coupling portion 146.
In addition, this is because the second coupling portion 146 is located at a position where splitting into the main frame portion 151 and the rear frame 142 supporting the portions of the vehicle body can be easily achieved.

The rear frame 142 includes a left-right pair of power unit mount holes 165, 165 (only symbol 165 on the viewer's side is shown) and a left-right pair of power unit mount holes 167, 167 (only symbol 167 on the viewer's side is shown) for mounting a rear portion of the power unit 22 (see Fig. 1), seat rail mount holes 171, 171 (only symbol 171 on the viewer's side is shown) and seat rail mount holes 172, 172 (only symbol 172 on the viewer's side is shown) for mounting the seat rails 13, 13 (see Fig. 1), a left-right pair of cushion upper portion mount holes 173, 173 (only symbol 173 on the viewer's side is shown) for mounting one end of the rear cushion unit 32 (see Fig. 1), a pivot insertion hole 174 for inserting the pivot shaft 27 (see Fig. 1) therein, and left-right pairs of bracket mount holes 176, 176 (only symbol 176 on the viewer's side is shown) and bracket mount holes 177, 177 (only symbol 177 on the viewer's side is shown) for mounting the brackets 24 and 26 (see Fig. 1), and is cast by use of a left-right split die.

Figs. 8(a) and 8(b) are side views of a main frame (third embodiment) according to the present invention. Incidentally, the same components as those in the second embodiment shown in Fig. 7 above are denoted by the same symbols as used above, and detailed description thereof is omitted.
In Fig. 8(a), a main frame 180 constituting a vehicle body frame 179 is a member cast from an aluminum alloy and composed of a front frame 181 on the front side, and a rear frame 142 welded to the rear end of the front frame 181. Incidentally, symbol 183 denotes a welded coupling portion between the front frame 181 and the rear frame 142.
The coupling portion 183 is a portion where a front-side coupling portion 183a (recessed portion) provided at the rear end of the front frame 181 and a rear-side coupling portion 183b (projected portion) provided on the rear frame 142 side are coupled.

The front frame 181 is a member formed to be hollow by placing a core at the time of casting, and is composed of a head pipe 148, a main frame portion 184 extended substantially rectilinearly rearwards from the head pipe 148, and a left-right pair of front support portions 185 and 186 (only symbol 185 on the viewer's side is shown) welded to a front lower portion of the main frame portion 184 and extended skewly downwardly sideways and skewly downwardly rearwards for supporting a front portion of the engine 18 (see Fig. 1).

The main frame portion 184 is a portion which is provided with a small section portion 184a (a straight line passing through the small section portion 184a is denoted by 187) being the smallest in sectional area at a rear portion thereof, and in which the sectional area of the coupling portion 183 is set greater than the sectional area of the small section portion 184a.

The head pipe 148 and the main frame portion 184, which are integrally formed, are portions constituting a front upper frame portion 188.
Symbols 191 and 192 (only symbol 191 on the viewer's side is shown) in the figure denote lower coupling portions between the front upper frame portion 188 and the left and right front support portions 185 and 186, and symbols 193, 193 denote engine support holes provided respectively in tip end portions of the front support portions 185 and 186.

Fig. 8(b) is a view along arrow b of Fig. 8(a), in which the lower coupling portion 191 is a portion where a left upper coupling portion 191a (projected portion) and a left lower coupling portion 191b (recessed portion) are coupled, and the lower coupling portion 192 is a portion where a right upper coupling portion 192a (projected portion) and a right lower coupling portion 192b (recessed portion) are coupled.

Thus, with the front frame 181 provided with the lower coupling portions 191 and 192, the front frame 181 can be divided into the front upper frame portion 188 and the front support portions 185 and 186, which are small in size, thereby ensuring easy casting thereof; in addition, at the front support portions 185 and 186, running of molten metal can be made favorable notwithstanding the slender shape, and casting quality can be enhanced.

Fig. 9 is a perspective view of a vehicle body frame (fourth embodiment) according to the present invention.
The vehicle body frame 201 is composed of a main frame 202, a left-right pair of seat rails 203 and 204 mounted to rear upper portions of the main frame 202, and left and right sub-frames 206 and 207 bridgingly mounted between rear lower portions of the main frame 202 and the seat rails 203 and 204, respectively. Incidentally, symbols 208 and 209 denote cross members bridgingly disposed between the left and right seat rails 203 and 204.

The main frame 202 is a member cast from an aluminum alloy, including a front frame 211 provided at a front upper portion, a rear frame 212 welded to the rear end of the front frame 211, and a lower frame 213 welded to a front lower portion of the front frame 211 and a lower portion of the rear frame 212. Incidentally, symbol 215 denotes a first coupling portion between the front frame 211 and the rear frame 212, symbol 216 denotes a second coupling portion between the front frame 211 and the lower frame 213, and symbols 217 and 218 denote a third coupling portion and a fourth coupling portion between the rear frame 212 and the lower frame 213.

The front frame 211 is composed of a head pipe 221, a single main frame portion 222 extended rearwards from the head pipe 221, a down frame 223 extended skewly rearwardly downwards from the head pipe 221, and a reinforcing member 224 bridgingly provided between the main frame portion 222 and the down frame 223.
The main frame portion 222 is a portion composed of a hollow member of which the sectional area is gradually enlarged from the rear end toward the head pipe 221, i.e., the sectional shape is varied from portion to portion.

The head pipe 221, the main frame portion 222 and the down frame 223 are members constituting a roughly V-shaped frame 226 integrally formed to be hollow by placing a core at the time of casting.

The rear frame 212 is a member composed of a main body portion 231, and a rear projected portion 232 projectedly formed at an upper rear portion of the main body portion 231 for mounting the seat rails 203 and 204, wherein the main body portion 231 is provided at its upper front portion with the first coupling portion 215, and the main body portion 231 is provided at its lower front portions with the third coupling portion 217 and the fourth coupling portion 218. Incidentally, symbol 234 denotes a cavity portion provided in the front surface of the main body portion 231, symbols 236 denote pivot shaft through-holes penetrating the main body portion 231 from both side surfaces to the cavity portion 234 for mounting the pivot shaft 27 (see Fig. 1).

The lower frame 213 is composed of an extension portion 241 provided on an extension line of the down frame 223, a bifurcated lower connection portion 242 provided at a lower portion of the extension portion 241, and a left frame 243 and a right frame 244 the one-side ends of which are coupled respectively to left and right lower end portions 242a and 242b of the lower connection portion 242 and the other-side ends of which are coupled to the rear frame 212.
The extension portion 241 and the lower connection portion 242 are members constituting a lower hollow frame 246 integrally formed to be hollow by placing a core at the time of casting.

As shown in Fig. 7 above, the present invention is thirdly characterized in that, in the vehicle body frame 139 for the motorcycle 10 (see Fig. 1) including the head pipe 148 for supporting a front wheel suspension at the front end thereof, the main frame portion 151 as a single main frame extended rearwards from the head pipe 148, and the rear frame 142 as a frame for supporting a rear wheel suspension, the rear frame 142 extending substantially downwards from a rear portion of the main frame portion 151, the vehicle body frame 139, specifically, the main frame 140 is cast from an aluminum alloy and composed of three component parts (i.e., the front half 143 constituting the front frame 141 on the front side, the rear half 144 constituting the front frame 141 at an intermediate position, and the rear frame 23 on the rear side) in the front-rear direction, the main frame portion 151 is provided with the small section portion 151a as a portion being the smallest in sectional area at substantially the center in the longitudinal direction thereof, and the three component parts are joined on the rear side relative to the small section portion 151a.

The above configuration ensures that, for example, when the front-side two component parts of the three component parts arranged in the front-rear direction of the main frame 140 are distributed on the main frame portion 151 side whereas the rear-side one component part is distributed on the rear frame 142 side, the front-side two component parts and the rear-side one component part can be formed in structures suitable for the respective positions, an error or errors in left-right assembly can be reduced, and the main frame 140 can be formed with good accuracy.
In addition, where the front-rear three component parts are joined by welding, the lengths of welding can be reduced, the welding can be carried out in a short time, and productivity can be enhanced.

Furthermore, since the front frame 141 and the rear frame 142 are coupled on the rear side relative to the small section portion 151a of the main frame portion 151, it is possible to ensure that stress is not liable to be concentrated on the second coupling portion 146 between the front frame 141 and the rear frame 142, the sectional area of the second coupling portion 146 can be set smaller, and it is possible to contrive a reduction in the weight of the main frame 140 and, hence, of the vehicle body frame 11.

The present invention is fourthly characterized in that the single main frame portion 151 is bisected in the front-rear direction of the vehicle body.
This makes it possible to reduce the assembly error or errors on the left and right sides of the main frame portion 151, to form the main frame portion 151 with good accuracy, and to produce the respective members of the bisected main frame portions 151 easily, thereby enhancing productivity.

The present invention is fifthly characterized in that the split and welded portions of the main frame 140 are provided respectively at a portion on the front side (i.e., the front frame portion 155) and at a portion on the rear side (i.e., the rear frame portion 156) relative to the position being smallest in sectional area (i.e., the small section portion 151a) of the main frame portion 151.

This ensures that an excessively high stress is not generated at the first coupling portion 145 and the second coupling portions 146 because these coupling portions are located while avoiding the small section portion 151a being the smallest in sectional area of the main frame portion 151. Besides, since a large-type hollow casting can be obviated, the hollow casting of the main frame portion 151 can be easily carried out.

The present invention is sixthly characterized in that, as shown in Fig. 8, the front support portions 185 and 186 as the engine hanger portions provided in the vehicle body frame 179 for supporting the engine 18 (see Fig. 1) are structurally separate members from the main frame portion 181.

Since the front support portions 185 and 186 are structurally separate members from the main frame portion 181, in the case of gravity casting of the front support portions 185 and 186, running of molten metal at the front support portions 185 and 186 can be made favorable, and casting quality can be enhanced.

The present invention is seventhly characterized in that, as shown in Fig. 9, the single main frame portion 222 is composed of a hollow member of which the sectional shape is varied from portion to portion.
This makes it possible to vary the rigidity of the main frame portion 222 from portion to portion, and to reduce the weight of the main frame portion 222.

Incidentally, while the front frame 71 and the rear frame 23 of the main frame 12 has been coupled by welding as shown in Fig. 2 in this embodiment, this configuration is not limitative of the present invention; for example, the front frame 71 and the rear frame 23 may be coupled by use of bolt and nut.

The present invention is suitably applicable to a motorcycle including a vehicle body frame in which a single main frame is used and is cast from an aluminum alloy.

### [Description of Reference Symbols]

10: motorcycle; 11, 139, 179: vehicle body frame; 12, 140, 180: vehicle body frame (main frame); 14, 148: head pipe; 16: front wheel suspension (front fork); 23, 71, 142, 143, 144, 155, 156: component part (rear frame, front frame, rear frame, front half, rear half, front frame portion, rear frame portion); 33: rear wheel suspension; 74, 151, 184: main frame (main frame portion); 74a: portion being the smallest in sectional shape (small section portion); 116: pivot support portion; 126, 127: recessed portion; 145, 146: split and welded portion (first coupling portion, second coupling portion); 151a: position where sectional area is the smallest (small section portion); 185, 186: engine hanger portion (front support portion).

## Claims

1. A vehicle body frame (11, 139, 179) for a motorcycle (10) comprising a head pipe (14, 148) for supporting a front wheel suspension (16) at the front end thereof, a single main frame (74, 151, 184) extended rearwards from said head pipe (14, 148), and a rear frame (23,142) for supporting a rear wheel suspension (33), said rear frame extending substantially downwards from a rear portion of said main frame (74, 151, 184), wherein
said vehicle body frame (11, 139, 179) is comprised of front and rear two component parts cast from an aluminum alloy; and
said main frame (74, 151, 184) is provided with a portion (74a,151a,184a) being the smallest in sectional area at substantially the center in the longitudinal direction thereof, and **characterized in that** said front and rear two component parts are coupled (72) on the rear side relative to said smallest sectional area portion (151a).

2. A vehicle body frame (11, 139, 179) for a motorcycle (10) as set forth in the preceding claim, wherein a front frame constituting a front portion of said main frame (74, 151, 184) is formed to be hollow by placing a core at the time of casting, and a rear frame constituting a rear portion of said main frame is cast by use of a left-right split die so that recessed portions opened in the leftward and rightward directions and pivot support portions (116) projecting in the leftward and rightward directions are integrally formed.

3. A vehicle body frame (11, 139, 179) for a motorcycle (10) comprising a head pipe (12, 140, 180) for supporting a front wheel suspension (16) at the front end thereof, a single main frame (74,151,184) extended rearwards from said head pipe (14, 148), and a rear frame (23;142) for supporting a rear wheel suspension, said rear frame extending substantially downwards from a rear portion of said main frame (74,151,184), wherein
said vehicle body frame (11, 139, 179) is cast from an aluminum alloy and is comprised of three component parts arranged in the front-rear direction; and
said main frame is provided with a portion (74a,151a,184a) being the smallest in sectional area at substantially the center in the longitudinal direction thereof, and **characterized in that** the rear-side two component parts of said three component parts are coupled (146) on the rear side relative to said smallest sectional area portion.

4. A vehicle body frame (11, 139, 179) for a motorcycle (10) as set forth in one of the preceding claims, wherein said single main frame is bisected in the front-rear direction of the vehicle body.

5. A vehicle body frame (11, 139, 179) for a motorcycle (10) as set forth in one of the preceding claims, wherein split and welded portions of said vehicle body frame are provided respectively at a portion on the front side and at a portion on the rear side, relative to the position where the sectional area of said main frame is the smallest.

6. A vehicle body frame (11, 139, 179) for a motorcycle (10) as set forth in one of the preceding claims, wherein an engine hanger portion (185, 186) provided in said vehicle body frame (11, 139, 179) for supporting an engine is structurally separate member from said main frame.

7. A vehicle body frame (11, 139, 179) for a motorcycle (10) as set forth in one of the preceding claims, wherein said single main frame is comprised of a hollow member varied in sectional shape from portion to portion.

## Patentansprüche

1. Fahrzeugkörperrahmen (11, 139, 179) für ein Motorrad (10), aufweisend ein Kopfrohr (14, 148) zum Lagern einer Vorderradaufhängung (16) am vorderen Ende desselben, einen einzelnen Hauptrahmen (74, 151, 184), der sich vom Kopfrohr (14, 148) nach hinten erstreckt, und einen hinteren Rahmen (23, 142) zum Lagern einer Hinterradaufhängung (33), wobei sich der hintere Rahmen von einem hinteren Abschnitt des Hauptrahmens (74, 151, 184) im Wesentlichen nach unten erstreckt, wobei
der Fahrzeugkörperrahmen (11, 139, 179) aus aus einer Aluminiumlegierung gegossenen zwei Komponententeilen, einem Vorderen und einem Hinteren, besteht, und
der Hauptrahmen (74, 151, 184) mit einem Abschnitt (74a, 151a, 184a) versehen ist, dessen Schnittfläche in der Längsrichtung desselben im Wesentlichen in der Mitte am kleinsten ist,
**dadurch gekennzeichnet, dass**
die zwei vorderen und hinteren Komponententeile bezüglich des kleinsten Schnittflächenabschnitts (151a) an der hinteren Seite gekoppelt (72) sind.

2. Fahrzeugkörperrahmen (11, 139, 179) für ein Motorrad (10) nach dem vorhergehenden Anspruch, wobei ein Vorderrahmen, der einen vorderen Abschnitt des Hauptrahmens (74, 151, 184) darstellt, hohl ausgebildet ist, indem zum Zeitpunkt des Gießens ein Kern platziert ist, und ein Hinterrahmen, der einen hinteren Abschnitt des Hauptrahmens darstellt, durch Verwendung einer Links-Rechts-Teilform gegossen ist, so dass sich in die linke und rechte Richtung öffnende ausgenommene Abschnitte und Schwenkwellenlagerabschnitte (116), die in die linke und rechte Richtung hervorragen, integral ausgebildet sind.

3. Fahrzeugkörperrahmen (11. 139, 179) für ein Motorrad (10), aufweisend ein Kopfrohr (12, 140, 180) zum Lagern einer Vorderradaufhängung (16) am vorderen Ende desselben, einen einzelnen Hauptrahmen (74, 151, 184), der sich vom Kopfrohr (14, 148) nach hinten erstreckt, und einen hinteren Rahmen (23, 142) zum Lagern einer Hinterradaufhängung, wobei sich der hintere Rahmen von einem hinteren Abschnitt des Hauptrahmens (74, 151, 184) im Wesentlichen nach unten erstreckt, wobei
der Fahrzeugkörperrahmen (11, 139, 179) aus einer Aluminiumlegierung gegossen ist und aus in der von vorne nach hinten verlaufenden Richtung angeordneten drei Komponententeilen besteht und
der Hauptrahmen (74, 151, 184) mit einem Abschnitt (74a, 151a, 184a) versehen ist, dessen Schnittfläche in der Längsrichtung im Wesentlichen in der Mitte desselben am kleinsten ist,
**dadurch gekennzeichnet, dass**
die hinterseitigen zwei Komponententeile der drei Komponententeile bezüglich des kleinsten Schnitttlächenabsclmitts auf der hinteren Seite gekoppelt (72) sind.

4. Fahrzeugrahmenkörper (11, 139, 179) für ein Motorrad (10) nach einem der vorhergehenden Ansprüche, wobei der einzelne Hauptrahmen in der von vorne nach hinten verlaufenden Richtung des Fahrzeugkörpers zweigeteilt ist.

5. Fahrzeugrahmenkörper (11, 139, 179) für ein Motorrad (10) nach einem der vorhergehenden Ansprüche, wobei aufgeteilte und geschweißte Abschnitte des Fahrzeugkörperrahmens bezüglich der Position, wo die Schnittfläche des Hauptrahmens am kleinsten ist, an einem Abschnitt an der vorderen Seite beziehungsweise an einem Abschnitt an der hinteren Seite vorgesehen sind.

6. Fahrzeugrahmenkörper (11, 139, 179) für ein Motorrad (10) nach einem der vorhergehenden Ansprüche, wobei ein im Fahrzeugkörperrahmen (11, 139, 179) zum Lagern eines Motors vorgesehener Motoraufhängungsabschnitt (185, 186) ein vom Hauptrahmen konstruktiv getrenntes Element ist.

7. Fahrzeugrahmenkörper (11, 139, 179) für ein Motorrad (10) nach einem der vorhergehenden Ansprüche, wobei der einzelne Hauptrahmen aus einem hohlen Element besteht, dessen Querschnittform von Abschnitt zu Abschnitt variiert.

## Revendications

1. Cadre de véhicule (11, 139, 179) pour une motocyclette (10) comprenant un tube frontal (14, 148) destiné à supporter une suspension de roue avant (16) à son extrémité avant, un cadre principal unique (74, 151, 184) étendu vers l'arrière à partir dudit tube frontal (14, 148), et un cadre arrière (23, 142) destiné à supporter une suspension de roue arrière (33), ledit cadre arrière s'étendant sensiblement vers le bas à partir d'une partie arrière dudit cadre principal (74, 151, 184), dans lequel
ledit cadre de véhicule (11, 139, 179) se compose de deux parties constitutives avant et arrière moulées en un alliage d'aluminium ; et
ledit cadre principal (74, 151, 184) comporte une partie (74a, 151a, 184a) dont l'aire en coupe est la plus faible, sensiblement au centre selon sa direction longitudinale, et **caractérisé en ce que** lesdites deux parties constitutives avant et arrière sont couplées (72) sur le côté arrière par rapport à ladite partie dont l'aire en coupe est la plus faible (151a).

2. Cadre de véhicule (11, 139, 179) pour une motocyclette (10) selon la revendication précédente, dans lequel un cadre avant constituant une partie avant dudit cadre principal (74, 151, 184) est formé en étant creux, en plaçant un noyau lors du moulage, et un cadre arrière constituant une partie arrière dudit cadre principal est moulé en faisant usage d'une matrice segmentée gauche-droite, de telle sorte que des parties évidées ouvertes selon les directions vers la gauche et vers la droite et des parties de support pivot (116) faisant saillie selon les directions vers la gauche et vers la droite sont formées d'un seul tenant.

3. Cadre de véhicule (11, 139, 179) pour une motocyclette (10) comprenant un tube frontal (12, 140, 180) destiné à supporter une suspension de roue avant (16) à son extrémité avant, un cadre principal unique (74, 151, 184) étendu vers l'arrière à partir dudit tube frontal (14, 148), et un cadre arrière (23, 142) destiné à supporter une suspension de roue arrière, ledit cadre arrière s'étendant sensiblement vers le bas à partir d'une partie arrière dudit cadre principal (74, 151, 184), dans lequel
ledit cadre de véhicule (11, 139, 179) est moulé en un alliage d'aluminium et se compose de trois parties constitutives agencées selon la direction avant-arrière ; et
ledit cadre principal comporte une partie (74a, 151a, 184a) dont l'aire en coupe est la plus faible, sensiblement au centre selon sa direction longitudinale, et **caractérisé en ce que** les deux parties constitutives de côté arrière desdites trois parties constitutives sont couplées (146) sur le côté arrière par rapport à ladite partie dont l'aire en coupe est la plus faible.

4. Cadre de véhicule (11, 139, 179) pour une motocyclette (10) selon l'une des revendications précédentes, dans lequel ledit cadre principal unique est divisé en deux selon la direction avant-arrière de la carrosserie de véhicule.

5. Cadre de véhicule (11, 139, 179) pour une motocyclette (10) selon l'une des revendications précédentes, dans lequel des parties divisées et soudées dudit cadre de véhicule sont disposées, respectivement, à une partie sur le côté avant et à une partie sur le côté arrière, par rapport à la position où l'aire en coupe est la plus faible.

6. Cadre de véhicule (11, 139, 179) pour une motocyclette (10) selon l'une des revendications précédentes, dans lequel une partie de suspension de moteur (185, 186) disposée dans ledit cadre de véhicule (11, 139, 179) pour supporter un moteur est un élément structurellement séparé dudit cadre principal.

7. Cadre de véhicule (11, 139, 179) pour une motocyclette (10) selon l'une des revendications précédentes, dans lequel ledit cadre principal unique se compose d'un élément creux dont la forme en coupe varie d'une partie à l'autre.
